(19) Europäisches Patentamt
European Patent Office
Office européen des brevets

(11) **EP 1 262 794 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.⁷: $G01S\ 13/524$, $G01S\ 13/90$

(21) Anmeldenummer: **02007599.0**

(22) Anmeldetag: **04.04.2002**

(54) **Verfahren zur Schätzung der Dopplerfrequenzposition des Hauptkeulenclutters bei mehrkanaligen Pulsdopplerradarsystemen**

Method for estimating the Doppler frequency of the main lobe clutter in multi-channel pulsed Doppler radar

Procédé d'estimation de la fréquence Doppler du lobe principal dans un radar Doppler multi-canaux

(84) Benannte Vertragsstaaten:
**DE FR GB IT SE**

(30) Priorität: **22.05.2001 DE 10124865**

(43) Veröffentlichungstag der Anmeldung:
**04.12.2002 Patentblatt 2002/49**

(73) Patentinhaber: **EADS Deutschland GmbH**
**81663 München (DE)**

(72) Erfinder: **Bickert, Bernhard**
**89079 Ulm-Einsingen (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**EP-A- 0 048 704    US-A- 4 217 583**
**US-A- 4 225 863    US-A- 5 708 437**
**US-A- 6 028 548**

• **BERIZZI F ET AL: "New time-domain clutter-lock algorithm" IEE PROCEEDINGS: RADAR, SONAR & NAVIGATION, INSTITUTION OF ELECTRICAL ENGINEERS, GB, Bd. 144, Nr. 6, 1. Dezember 1997 (1997-12-01), Seiten 341-347, XP006008938 ISSN: 1350-2395**

**Beschreibung**

Die Erfindung betrifft ein Verfahren zur Schätzung der Dopplerfrequenzposition des Hauptkeulenclutters bei mehrkanaligen Pulsdopplerradarsystemen, insbesondere beim Synthetischen Apertur-Radar.

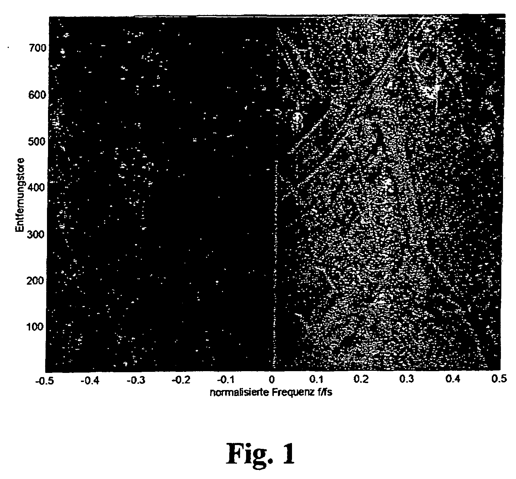

Die Güte der Schätzung der Dopplerfrequenzposition des Hauptkeulenclutters beim Synthetischen Apertur-Radar (SAR) oder beim Moving Target Indication (MTI) ist von großer Bedeutung für die Abmischung der dopplerfrequenzverschobenen Radarsignale und für die Bestimmung des absoluten Bezugspunktes bei der Geschwindigkeitsbestimmung und bei der Repositionierung fahrender Objekte. Die Dopplerfrequenzposition des Hauptkeulenclutters ist dabei abhängig von der Relativgeometrie (Azimuth- und Elevationswinkel) zwischen dem Sender und Empfänger, von dem durch die Radarantenne beleuchteten Bodenfleck sowie von der Geschwindigkeit des Antennensystems in Flugrichtung. Bei schwenkenden Antennensystemen wandert das empfangene Dopplerfrequenzspektrum zwischen negativen und positiven Dopplerfrequenzen über die Dopplerfrequenz Null (Fig. 1). Außerdem kommt es neben einer Verschiebung der absoluten Position des Hauptkeulenclutters zu einer Verengung bzw. Verbreiterung der spektralen Breite des Hauptkeulenclutters. Eine einfache Schätzung der Dopplerfrequenzposition des Hauptkeulenclutters erweist sich oft als problematisch, da die Dopplerfrequenzposition von der jeweiligen spektralen Breite des Hauptkeulenclutters abhängt.

EP 0 048 704 A1 beschreibt ein Verfahren zur Schätzung der Dopplerfrequenzposition des Hauptkeulenclutters in ein- oder mehrkanaligen SAR-Systemen mittels Korrelation der empfangenen Dopplerfrequenzspektren mit einer vorher bestimmten Referenzfunktion eines Punktziels. Nachteilig ist dabei, dass die Breite und Form der Referenzfunktion an die Form des Dopplerfrequenzspektrums der Antennenhauptkeule anzupassen ist, um ein optimales Ergebnis zu erhalten. Ein weiterer wesentlicher Nachteil ist, dass bei einem schlechten Signal-Rausch-Verhältnis des Dopplerfrequenzspektrums die Korrelation zu schlechten Ergebnissen führt.

In weiteren bekannten Verfahren zur Schätzung der Dopplerfrequenzposition des Hauptkeulenclutters werden Dopplerfrequenzspektren aus verschiedenen Entfernungsbereichen (Entfernungstoren) miteinander korreliert.

Mit den herkömmlichen Verfahren werden zur Schätzung der Dopplerfrequenzposition des Hauptkeulenclutters nur Radardaten aus einem Kanal verwendet. Durch die Verwendung von Korrelationsmethoden ergeben sich Nachteile hinsichtlich des erhöhten Rechenaufwands, wodurch eine echtzeitfähige Schätzung der Dopplerfrequenzposition des Hauptkeulenclutters nicht immer möglich ist. Ferner erweist es sich als nachteilig, dass mit den bekannten Verfahren keine adaptive Bestimmung der Dopplerfrequenzposition möglich ist. Adaptiv bedeutet hierbei, dass die Bestimmung der Dopplerfrequenzposition allein aus den Daten der Dopplerfrequenzspektren erfolgt. Gerade bei schwenkenden Antennensystemen führt eine nichtadaptive Bestimmung der Dopplerfrequenzposition zu erheblichen Problemen. Die sich ändernden Antennenpositionen müssen in der Referenzfunktion berücksichtigt werden, welche nur annähernd bestimmt werden kann. Dies kann zu schlechten Korrelationsergebnissen und somit zu ungenauen Dopplerfrequenzpositionen führen.

Ein Verfahren gemäß dem Oberbegriff von Anspruch 1 ist in US 4 217 583 beschrieben.

Aufgabe der Erfindung ist es, ein Verfahren anzugeben, mit dem eine einfache, genaue und echtzeitfähige Schätzung der Dopplerfrequenzposition des Hauptkeulenclutters bei feststehenden und schwenkenden Antennensystemen möglich ist.

Diese Aufgabe wird mit dem Verfahren nach Patentanspruch 1 gelöst. Vorteilhafte Ausführungen der Erfindung sind Gegenstand von Unteransprüchen.

Das erfindungsgemäße Verfahren ist gekennzeichnet durch Einsatz eines mit einem Summen- und einem Differenzkanal ausgestatteten Pulsdopplerradarsystem wobei die Verarbeitung der Informationen aus dem Summen- und Differenzkanal folgendermaßen abläuft:

- Berechnung eines mittleren Dopplerfrequenzspektrums für den Summenkanal und für den Differenzkanal durch Mittelung der jeweiligen Dopplerfrequenzspektren über verschiedene Entfernungstore,

- Normierung der beiden mittleren Dopplerfrequenzspektren auf den Maximalwert im Spektrum des Summenkanals,

- Berechnung eines quadratischen Differenzspektrums durch Bildung der Differenz zwischen dem quadrierten normierten mittleren Dopplerfrequenzspektrum des Summenkanals und dem quadrierten normierten mittleren Dopplerfrequenzspektrum des Differenzkanals,

- Glättung und Normierung des quadratischen Differenzspektrums auf seinen Maximalwert,

- Ermittlung der Dopplerfrequenzposition des Hauptkeulenclutters aus dem Vergleich des normierten quadratischen Differenzspektrum mit einem Schwellwert.

Die gemittelten Dopplerfrequenzspektren für den Summen- und Differenzkanal werden im weiteren auch als Summen- und Differenzkanalspektrum bezeichnet.

In dem erfindungsgemäßen Verfahren wird die Mehrkanaligkeit eines Pulsdopplerradarsystems genutzt. Dabei werden erfindungsgemäß die Informationen (Signale) des Summen- und Differenzkanals derart verwendet, um auf einfache Art und Weise bei feststehenden und schwenkenden Antennensystemen eine robuste, adaptive und echtzeitfähige Schätzung der Dopplerfrequenzposition des Hauptkeulenclutters zu erreichen.

Ein Pulsdopplerradarsystem umfaßt bekanntermaßen Sende- und Empfangsmodule, die hinter dem Frontend, z.B. der Antenne des Radarsystems angeordnet sind. Das Sendemodul eines Pulsdopplerradarsystems strahlt im Sendefall die Signale (Pulse) über die gesamte Antennenfläche ab. Im Empfangsfall wird die Antennenfläche z.B. halbiert, d.h. jede Hälfte der Antenne empfängt ein eigenes Signal. Durch Addition der Signale aus den beiden Antennenhälften wird das Summensignal und durch Subtraktion der beiden Signale das Differenzsignal gebildet. Die spektrale Analyse der Signale führt somit zu einem Summen- und Differenzkanalspektrum.

Ein weiterer Vorteil des erfindungsgemäßen Verfahrens ist, dass der Rechenaufwand gegenüber herkömmlichen Korrelationsverfahren deutlich gesenkt wird, wodurch eine echtzeitfähige Schätzung der Dopplerfrequenzposition des Hauptkeulenclutters auch bei einer hohen Datenmenge (z.B. hohe Pulsrate des Radarsystems) möglich ist. Aufgrund der Mehrkanaligkeit des Pulsdopplerradarsystems wird zur Schätzung der Dopplerfrequenzposition des Hauptkeulenclutters keine Referenzfunktion benötigt, da die Schätzung der Dopplerfrequenzposition des Hauptkeulenclutters nur mit den Informationen aus dem Summen- und Differenzkanal erfolgt. In dem erfindungsgemäßen Verfahren entfällt somit die rechenzeitintensive Bestimmung der Korrelationsfunktion. Das erfindungsgemäße Verfahren liefert auch bei einem schlechten Signal-Rausch-Verhältnis zuverlässige Ergebnisse.

Ein weiterer Vorteil des erfindungsgemäßen Verfahrens gegenüber den herkömmlichen Korrelationsverfahren ist, dass mit dem erfindungsgemäßen Verfahren eine adaptive Schätzung der Dopplerfrequenzposition des Hauptkeulenclutters möglich ist, d.h. die Position wird allein aus dem empfangenen Radardaten geschätzt. Das erfindungsgemäße Verfahren ist somit gleichermaßen für feststehende als auch für schwenkende Antennensystemen einsetzbar. Mit dem erfindungsgemäßen Verfahren ist es möglich, dass bei schwenkenden Antennensystemen und der sich dabei ändernden spektralen Breite des Hauptkeulenclutters die Schätzung der Dopplerfrequenzposition unabhängig von der spektralen Breite des Hauptkeulenclutters erfolgt.

Ein weiterer Vorteil ist, dass aufgrund der Bestimmung der Dopplerfrequenz ein ungenauer Antennenstellwinkelwert nachträglich justiert werden kann.

Die Berechnung der Dopplerfrequenzposition des Hauptkeulenclutters erfolgt erfindungsgemäß aus dem Vergleich des normierten quadratischen Differenzspektrum mit einem Schwellwert. In einer vorteilhaften Ausführung der Erfindung kann das normierte quadratische Differenzspektrum mit einem für alle Spektralpositionen konstanten Schwellwert verglichen werden, wodurch die Kanten einer Schwellwertüberschreitung detektiert werden können. Vorteilhaft liefert der Vergleich für eine Schwellwertuberschreitung eine 1 und für eine Schwellwertunterschreitung eine 0. Somit wird eine rechteckige Funktion erzeugt mit einer linken und rechten Kante einer Schwellwertüberschreitung. Der Schwellwert ist vorteilhaft größer als das Untergrundrauschens des geglätteten quadratischen Differenzspektrums. Die Berechnung der Dopplerfrequenzposition des Hauptkeulenclutters erfolgt dann bevorzugt aus der mittleren Position zwischen der linken und rechten Kante der Schwellwertüberschreitung.

In einer vorteilhaften Ausführung der Erfindung ist es möglich, nur über einen Bruchteil der von dem Pulsdopplerradarsystem in dem Summen- und Differenzkanal erzeugten Dopplerfrequenzspektren zu mitteln. Dies bedeutet, dass z.B. nur jeder n-te Radarpuls ausgewertet und somit zur Mittelung herangezogen wird. Dadurch ergeben sich Vorteile hinsichtlich einer Verbesserung des Rechenaufwands.

Es ist in einer weiteren vorteilhaften Ausführung der Erfindung auch möglich, zur Berechnung der mittleren Summen- und Differenzkanalspektren nur über einen Bruchteil der verschiedenen Entfernungstore zu mitteln. Hierbei wird zur Bestimmung des Summen- und Differenzkanalspektrums z.B. nur jedes n-te Entfernungstor herangezogen. Auch hier ergeben sich Vorteile hinsichtlich einer deutlichen Verbesserung des Rechenaufwands.

In einer vorteilhaften Ausführung der Erfindung wird mittels der ermittelten Doppierfrequenzposition des Hauptkeulenclutters der absoluten Antennenblickwinkel teiladaptiv bestimmt. Aus der Dopplerfrequenzposition $pos_{max}$ wird die eindeutige Dopplerfrequenz $fd_{main}$ unter Berücksichtigung der Mehrdeutigkeitszahl amb, der maximalen Anzahl an Dopplerfrequenzzellen M und der Pulswiederholfrequenz prf wie folgt berechnet: für positive Doppier:

$$fd_{main} = \left( amb + \frac{pos_{max}}{M} \right) \cdot prf$$

für negative Doppler:

$$fd_{main} = \left( amb + \frac{pos_{max} - M}{M} \right) \cdot prf$$

Die Mehrdeutigkeitszahl amb ergibt sich aus

$$amb = fix\left(\frac{2 \cdot \overline{v}_{rad} \cdot f_c/c}{prf}\right)$$

mit

| | |
|---|---|
| $\overline{V}_{rad}$ | Radialgeschwindigkeit in m/s aus Daten z.B. des Inertial Navigations Systems geschätzt, |
| $f_c$: | Sendefrequenz des Radars in Hz, |
| $c$ : | Lichtgeschwindigkeit in m/s. |

Aus der Dopplerfrequenz $fd_{main}$, der Radarsendefrequenz $f_c$ und der Lichtgeschwindigkeit c wird die Relativgeschwindigkeit $v_{rel}$ in m/s des Hauptkeulenclutters gemäß

$$v_{rel} = \frac{c \cdot fd_{main}}{2 \cdot f_c}$$

bestimmt. Der Antennenblickwinkel $\alpha$ in rad wird dann aus

$$\alpha = \cos^{-1}\left(\frac{v_{rel}}{v_{track} \cdot \cos(\varepsilon)}\right)$$

teiladaptiv bestimmt, wobei mit $v_{track}$ in m/s die Geschwindigkeit des Antennensystems in Flugrichtung, mit $\alpha$ in rad der Antennenblickwinkel gegenüber der Flugrichtung und mit $\varepsilon$ in rad der Depressionswinkel der Antennenblickrichtung gegenüber der Horizontalen bezeichnet sind.

Das erfindungsgemäße Verfahren sowie weitere vorteilhafte Ausführungen der Erfindung werden anhand einer Figur und eines Beispiels näher erläutert. Es zeigen

Fig. 1     ein typisches Entfernungs-Dopplerbild mit einer Verschiebung des Bereichs des Hauptkeulenclutters,

Fig. 2     die Relativgeometrie zwischen Sender und Empfänger als Projektion auf die Horizontalebene und die durch Schwenken der Radarantenne beleuchteten Bodenflecke,

Fig. 3     ein beispielhaftes mittleres Summen- und Differenzkanalspektrum eines schwenkenden Pulsdopplerradarsystems,

Fig. 4     ein auf den Maximalwert des Summenkanalspektrum normiertes mittleres Summen- und Differenzkanalspektrum,

Fig. 5     ein aus einem beispielhaften mittleren Summen- und Differenzkanalspektrum erzeugtes quadratisches Differenzspektrum sowie das geglättete Differenzspektrum,

Fig. 6     ein normiertes quadratisches Differenzspektrum mit einem konstanten Schwellwert,

Fig. 7     den Vergleich eines normierten quadratischen Differenzspektrums mit einem konstanten Schwellwert.

Fig. 1 zeigt ein typisches Entfernungs-Dopplerbild z.B. beim MTI-Verfahren. In dem Bild sind die Entfernungstore über der normalisierten Frequenz $f/f_s$ aufgetragen. Dabei bedeutet eine normalisierte Frequenz von Null, dass das Signal gegenüber der Dopplerfrequenzposition Null nicht verschoben ist. In dem Diagramm ist deutlich zu erkennen, dass der Bereich des Hauptkeulenclutters gegenüber der Dopplerfrequenzposition Null verschoben ist.

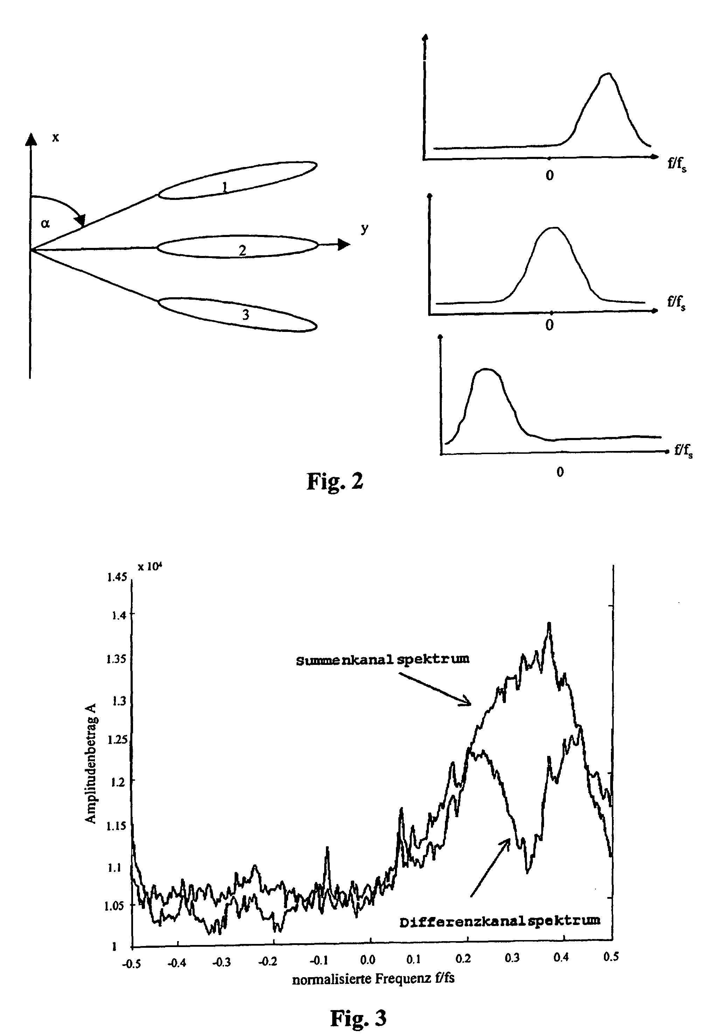

Fig. 2 zeigt links die Relativgeometrie zwischen Sender und Empfänger als Projektion auf die Horizontalebene. Außerdem sind die durch Schwenken der Radarantenne beleuchteten Bodenflecke schematisch dargestellt. Die Ausrichtung der Antenne des Senders in Richtung der beleuchteten Bodenflecke wird als Antennenblickrichtung bezeichnet. Die Flugrichtung der Antenne erfolgt in x-Richtung, die Blickrichtung der Antenne in y-Richtung. Der Winkel zwischen der Flugrichtung und der Antennenblickrichtung wird als Antennenblickwinkel bezeichnet.

Führt die Antenne einen Schwenk von Position 1 zu Position 3 durch, wobei die entsprechenden Bodenflecke abgedeckt werden, so wandert das Dopplerfrequenzspektrum von positiven Dopplerfrequenzen zu negativen Dopplerfrequenzen. In Fig. 2 ist rechts neben den jeweiligen Bodenflecken das dazugehörige Dopplerfrequenzspektrum stark schematisch dargestellt. Bei der Position 2 beträgt die Dopplerfrequenz Null. Mit der Wanderung des Dopplerfrequenzposition in Abhängigkeit der Antennenblickrichtung ändert sich auch die absolute Position der Dopplerfrequenzposition des Hauptkeulenclutters. Damit verbunden, tritt auch eine Verengung oder Verbreiterung der spektralen Breite des Hauptkeulenclutters auf.

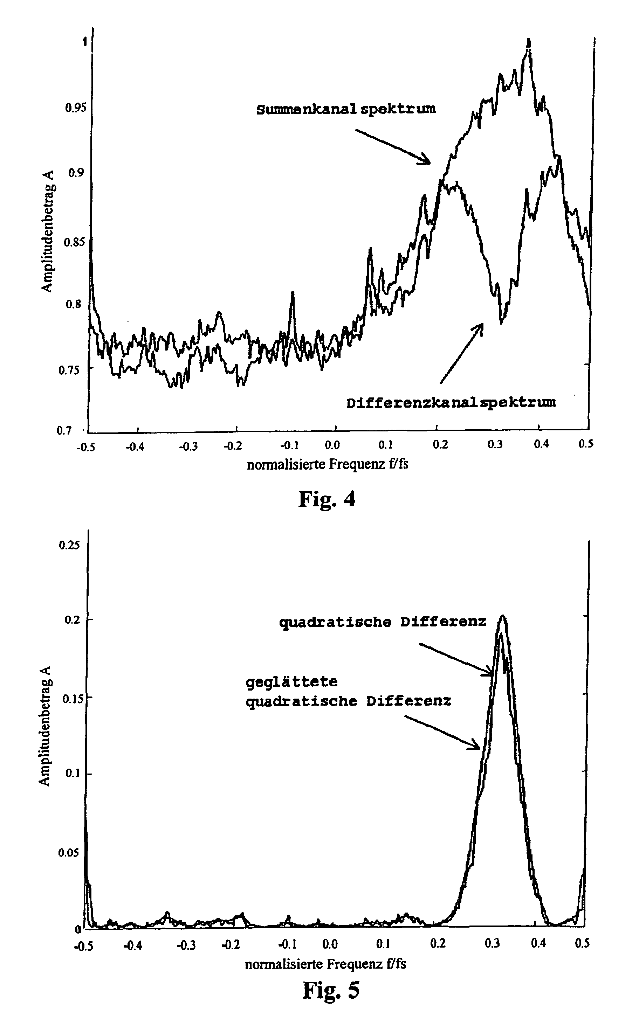

Die Verarbeitung der Informationen aus dem Summen- und Differenzkanal eines Pulsdopplerradarsystems werden beispielhaft in den Fig. 3 bis Fig. 7 erläutert. Fig. 3 zeigt ein beispielhaftes mittleres Summen- und Differenzkanalspektrum, wobei die Amplitude des Spektrums über einer normalisierten Frequenz aufgetragen ist. Die normalisierte Frequenz läuft dabei von negativen Werten zu positiven Werten, wobei der Wert Null einer Dopplerfrequenz von Null entspricht.
Die Mittelung des Summen- und Differenzkanalspek-

Differenzkanalspektrum,

trums erfolgte hierbei über verschiedene Entfernungsbereiche. Vorteilhaft kann hier das Mittelungsverfahren des geometrischen Mittelwertes verwendet werden, wodurch das mittlere Spektrum zusätzlich geglättet wird. Die Spektren weisen ein starkes Untergrundrauschen auf. Es zeigt sich ein Maximum bei einer normalisierten Frequenz von 0,3. Dieses Maximum bezeichnet den spektralen Bereich des Hauptkeulenclutters.

Zur weiteren Verarbeitung der Spektren werden das Summen- und Differenzkanalspektrum auf den Maximalwert des Summenkanalspektrums normiert (Fig. 4). Anschließend erfolgt die Berechnung eines quadratischen Differenzspektrums, wobei die Differenz zwischen dem quadrierten Summenkanalspektrum und dem quadrierten Differenzkanalspektrum gebildet wird (Fig. 5). Das quadratische Differenzspektrum wird dann geglättet, wobei die Glättung mittels bekannter mathematischer Glättungsverfahren erfolgt. Die Darstellung der Spektren zeigt, dass aufgrund der quadratischen Differenz das Signal-Rausch-Verhältnis wesentlich verbessert ist. Der spektrale Bereich des Hauptkeulenclutters erscheint nun als deutlicher Bereich auf einem niedrigen Untergrundrauschen.

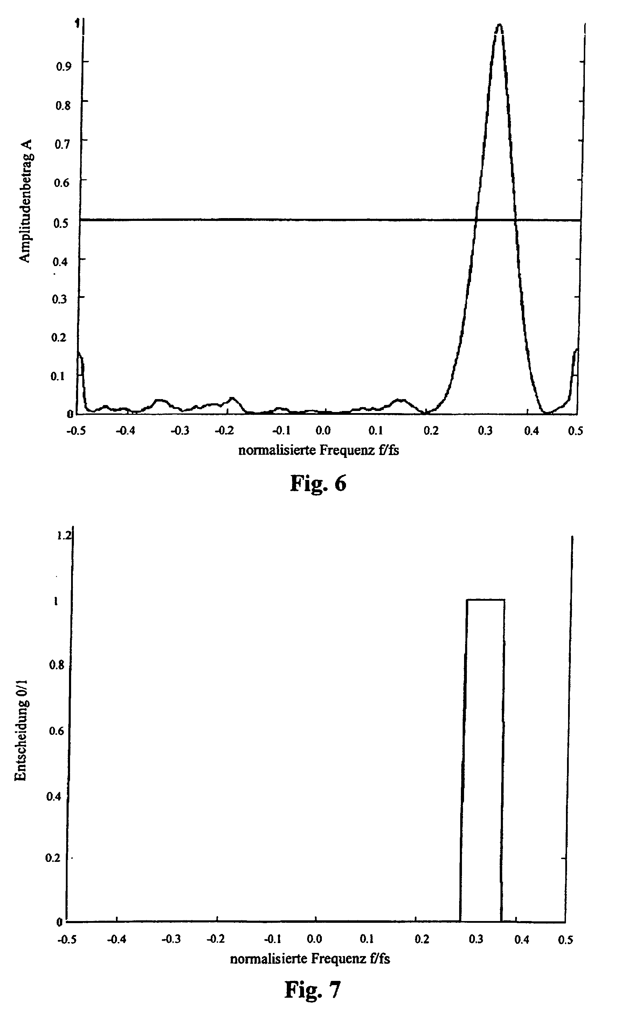

Fig. 6 zeigt das geglättete und normierte quadratische Differenzspektrum mit einem konstanten Schwellwert. Die Normierung des quadratischen Differenzspektrums erfolgt dabei auf den Maximalwert des geglätteten quadratischen Differenzspektrums.

Der Vergleich eines normierten quadratischen Differenzspektrums mit einem konstanten Schwellwert und den je nach Schwellwertüber- oder unterschreitungen gelieferten Ergebnisse 1 oder 0 ist in Fig. 7 gezeigt. Das Ergebnis dieses Vergleichs ist eine Rechteckfunktion mit einer linken und einer rechten Kante. Die mittlerer Position dieser beiden Kanten liefert als Ergebnis die Dopplerfrequenzposition des Hauptkeulenclutters. Diese Position ist unabhängig von einer ständigen Fluktuation der Position des Maximums des quadratischen Differenzspektrums.

**Patentansprüche**

1. Verfahren zur Schätzung der Dopplerfrequenzposition des Hauptkeulenclutters bei zwei- oder mehrkanaligen Pulsdopplerradarsystemen, insbesondere beim Synthetischen Apertur-Radar, mit einem Summen- und einem Differenzkanal, **dadurch gekennzeichnet, daß** die Verarbeitung der Informationen aus dem Summen- und Differenzkanal folgendermaßen abläuft:

    - Berechnung eines mittleren Dopplerfrequenzspektrums für den Summenkanal und für den Differenzkanal durch Mittelung der jeweiligen Dopplerfrequenzspektren über verschiedene Entfernungstore,

    - Normierung der beiden mittleren Dopplerfrequenzspektren auf den Maximalwert im Spektrum des Summenkanals,

    - Berechnung eines quadratischen Differenzspektrums durch Bildung der Differenz zwischen dem quadrierten normierten mittleren Dopplerfrequenzspektrum des Summenkanals und dem quadrierten normierten mittleren Dopplerfrequenzspektrum des Differenzkanals,

    - Glättung und Normierung des quadratischen Differenzspektrums auf seinen Maximalwert,

    - Ermittlung der Dopplerfrequenzposition des Hauptkeulenclutters aus dem Vergleich des normierten quadratischen Differenzspektrum mit einem Schwellwert.

2. Verfahren nach Anspruch 1, **dadurch gekennzeichnet, dass** das normierte quadratische Differenzspektrum mit einem für alle Spektralpositionen konstanten Schwellwert verglichen wird und der Vergleich eine 1 für eine Schwellwertüberschreitung und eine 0 für eine Schwellwertunterschreitung liefert, wodurch eine linke und eine rechte Kante einer Schwellwertüberschreitung erzeugt wird.

3. Verfahren nach Anspruch 2, **dadurch gekennzeichnet, dass** der Schwellwert größer als das Untergrundrauschens des geglätteten quadratischen Differenzspektrums ist.

4. Verfahren nach Anspruch 2 oder 3, **dadurch gekennzeichnet, dass** die Dopplerfrequenzposition des Hauptkeulenclutters aus dem Mittelwert zwischen linker und rechter Kante der Schwellwertüberschreitung berechnet wird.

5. Verfahren nach einem der vorangehenden Ansprüche, **dadurch gekennzeichnet, dass** zur Berechnung des mittleren Dopplerfrequenzspektrums für den Summen- und Differenzkanal nur über einen Bruchteil der von dem Pulsdopplerradarsystem in dem Summen- und Differenzkanal erzeugten Dopplerfrequenzspektren gemittelt wird.

6. Verfahren nach einem der vorangehenden Ansprüche, **dadurch gekennzeichnet, dass** zur Berechnung der mittleren Dopplerfrequenzspektren für den Summen- und Differenzkanal jeweils nur über einen Bruchteil der verschiedenen Entfernungstore gemittelt wird.

7. Verfahren nach einem der vorangehenden Ansprüche, **dadurch gekennzeichnet, dass** die Dopplerfrequenzspektren durch Berechnung des geometrischen Mittelwertes gemittelt werden.

8. Verfahren nach einem der vorangehenden Ansprüche, **dadurch gekennzeichnet, dass** mittels der ermittelten Dopplerfrequenzposition des Hauptkeulenclutters der Antennenblickwinkel teiladaptiv bestimmt wird.

## Claims

1. Method for estimating the Doppler frequency position of the main lob clutter in two-channel or multichannel pulse-Doppler radar systems, in particular for a synthetic aperture radar, having a sum channel and a different channel, **characterized in that** the information from the sum channel and from the difference channel is processed as follows:

   - calculation of a main Doppler frequency spectrum for the sum channel and for the difference channel by averaging the respective Doppler frequency spectra over different range gates,
   - normalization of the two main Doppler frequency spectra to the maximum value in the spectrum of the sum channel,
   - calculation of a square difference spectrum by forming the difference between the squared normalized main Doppler frequency spectrum of the sum channel and the squared normalized mean Doppler frequency spectrum of the difference channel,
   - smoothing and normalization of the square difference spectrum to its maximum value,
   - determination of the Doppler frequency position of the main lobe clutter from the comparison of the normalized square difference spectrum with a threshold value.

2. Method according to Claim 1, **characterized in that** the normalized square difference spectrum is compared with a threshold value which is constant for all spectral positions, and the comparison process produces a 1 if the threshold value is exceeded and a 0 if the threshold value is undershoot, by which means a left edge and a right edge are produced for the area in which the threshold value is exceeded.

3. Method according to Claim 2, **characterized in that** the threshold value is higher than the background noise of the smoothed square difference spectrum.

4. Method according to Claim 2 or 3, **characterized in that** the Doppler frequency position of the main lobe clutter is calculated from the mean value between the left edge and the right edge of the area in which the threshold value is exceeded.

5. Method according to one of the preceding claims, **characterized in that,** in order to calculate the mean Doppler frequency spectrum for the sum channel and difference channel, the averaging process is carried out only over a fraction of the Doppler frequency spectra which are produced by the pulse-Doppler radar system in the sum channel and difference channel.

6. Method according to one of the preceding claims, **characterized in that,** in order to calculate the mean Doppler frequency spectra for the sum channel and difference channel, the averaging process is in each case carried out only over a fraction of the different range gates.

7. Method according to one of the preceding claims, **characterized in that** the Doppler frequency spectra are averaged by calculating the geometric mean value.

8. Method according to one of the preceding claims, **characterized in that** the antenna look angle is determined on a partially adaptive basis by means of the determined Doppler frequency position of the main lobe clutter.

## Revendications

1. Procédé d'estimation de la fréquence Doppler du lobe principal dans des systèmes de radar à effet Doppler à deux ou à plusieurs canaux, en particulier dans le radar d'ouverture synthétique, avec un canal de somme et un canal de différence, **caractérisé en ce que** le traitement des informations provenant du canal de somme et du canal de différence est effectué de la façon suivante :

   - calcul d'un spectre moyen de fréquence Doppler pour le canal de somme et pour le canal de différence en faisant la moyenne des spectres respectifs de fréquences Doppler sur différentes portes d'éloignement,
   - normalisation des deux spectres moyens de fréquences Doppler sur la valeur maximale dans le spectre du canal de somme,
   - calcul d'un spectre de différence quadratique par formation de la différence entre le spectre moyen normalisé carré de fréquences Doppler du canal de somme et le spectre moyen normalisé carré de fréquences Doppler du canal de différence,
   - lissage et normalisation du spectre de différence quadratique sur sa valeur maximale,
   - détermination de la fréquence Doppler du lobe principal à partir de la comparaison du spectre de différence quadratique normalisé avec une valeur de seuil.

2. Procédé selon la revendication 1, **caractérisé en ce que** le spectre de différence quadratique normalisé est comparé avec une valeur de seuil constante pour toutes les positions spectrales et la comparaison fournit un 1 pour un dépassement du seuil et un 0 pour un franchissement du seuil vers le bas, ce qui produit un côté gauche et un côté droit d'un dépassement de seuil.

3. Procédé selon la revendication 2, **caractérisé en ce que** la valeur de seuil est plus grande que le bruit de fond du spectre de différence quadratique lissé.

4. Procédé selon la revendication 2 ou 3, **caractérisé en ce que** la fréquence Doppler du lobe principal est calculée à partir de la valeur moyenne entre le côté gauche et le côté droit du dépassement de seuil.

5. Procédé selon l'une quelconque des revendications précédentes, **caractérisé en ce que**, pour le calcul du spectre de fréquence Doppler moyen pour le canal de somme et le canal de différence, on ne fait la moyenne que sur une fraction des spectres de fréquence Doppler produits par le système de radar pulsé à effet Doppler dans le canal de somme et le canal de différence.

6. Procédé selon l'une quelconque des revendications précédentes, **caractérisé en ce que**, pour le calcul des spectres de fréquence Doppler moyens pour le canal de somme et le canal de différence, on ne fait chaque fois la moyenne que sur une fraction des différentes portes d'éloignement.

7. Procédé selon l'une quelconque des revendications précédentes, **caractérisé en ce que** l'on fait la moyenne des spectres de fréquence Doppler par le calcul de la moyenne géométrique.

8. Procédé selon l'une quelconque des revendications précédentes, **caractérisé en ce que** l'angle de visée de l'antenne est déterminé de façon partiellement adaptative au moyen de la fréquence Doppler déterminée du lobe principal.

**Fig. 1**

**Fig. 2**

**Fig. 3**

Fig. 4

Fig. 5

**Fig. 6**

**Fig. 7**